# EUROPÄISCHE PATENTSCHRIFT

(11) **EP 3 244 298 B1**
(45) Veröffentlichungstag und Bekanntmachung des Hinweises auf die Patenterteilung: **01.04.2020**
(21) Anmeldenummer: 17165665.5
(22) Anmeldetag: 10.04.2017
(51) Int. Cl.: G06F 3/12

(54) **JOBMAKER MIT ZENTRALER JOBERFASSUNG**
JOBMAKER WITH CENTRAL JOB DOCUMENTATION
PRODUCTEUR DE TÂCHES COMPRENANT UNE DÉTECTION DE TÂCHES CENTRALISÉE

(30) Priorität: 13.05.2016 DE 102016208283
(43) Veröffentlichungstag der Anmeldung: 15.11.2017
(73) Patentinhaber: Heidelberger Druckmaschinen AG, 69115 Heidelberg (DE)
(72) Erfinder: von Spreckelsen, Dr. Meino, 24105 Kiel (DE); von Neindorff, Boris, 24251 Osdorf - Gut Borghorst (DE)

(56) Entgegenhaltungen:
- EP-A1- 0 806 721
- US-A1- 2007 046 995
- US-A1- 2010 195 124

## Beschreibung

Die vorliegende Erfindung betrifft ein Verfahren zur Erstellung von Druckvorstufendateien zur Abarbeitung in einem Druckprozess mittels eines Rechners mit einem Bildschirm, wobei dem Rechner über mehrere Eingangskanäle Druckaufträge in digitaler Form zugeleitet werden. Die Erfindung wird durch den unabhängigen Anspruch definiert. Weitere Aspekte der Erfindung sind in den abhängigen Ansprüchen angegeben. Ausführungsarten, die nicht in den Umfang der Ansprüche fallen, beschreiben keinen Teil der vorliegenden Erfindung.

Druckaufträge werden heute meist in Druckereien in digitaler Form angeliefert. Dabei können die digitalen Daten der Druckaufträge über unterschiedliche Eingangskanäle in die Druckerei gelangen. Neben der Internetanbindung über Online-Portale, wie zum Beispiel Web-Shops oder FTP-Server, werden nach wie vor viele digitale Druckaufträge über Datenträger wie USB-Stick, CD-ROM angeliefert. Weiterhin können digitale Druckaufträge auch als Anhänge von E-Mails in die Druckerei gelangen. Daraus ergibt sich das Problem, dass die über die diversen Eingangskanäle angelieferten digitalen Druckaufträge an verschiedenen Orten ungeprüft abgelegt werden. Dies führt dazu, dass es für die verschiedenen Eingangskanäle keinen gemeinsam strukturierten Speicherort gibt. Weiterhin hat der Bediener während der Aufbereitung der digitalen Druckaufträge für die Druckvorstufe das Problem, dass er Kundendaten zu einem Druckauftrag zuordnen muss. Dabei kommt es vor, dass der Bediener nicht weiß, woher er die Kundendaten bekommt. Selbst wenn der Bediener das Wissen hat und die Kundendaten richtig zuordnet, so muss der Bediener, nachdem er die Kundendaten dem Auftrag hinzugefügt hat, warten, bis das digitale Workflow-System die Daten in den Druckauftrag kopiert hat. Daran schließt sich eine weitere Wartezeit an, da der Bediener dann nochmals warten muss, bis das Workflow-System durch eine Prüfung im Rahmen von Preflight nun zusätzliche Informationen für die weitere Abarbeitung zur Verfügung gestellt hat. Unter Preflight versteht der Fachmann im Druckbereich die softwareseitige Interpretation und Prüfung von Satz- und Bilddaten oder PDF-Dokumenten nach vordefinierten Regeln durch die Workflow-Software. Standardprüfungen bei dieser Vor-Druck- oder Vor-PDF-Kontrolle beziehen sich darauf, ob sich alle Bilddaten im Zugriff befinden, ob die erforderlichen Schriften aktiviert sind, ob die Farbräume korrekt zugewiesen sind, ob bei PDF-Dateien Schriften oder Linien/Konturen vektorisiert oder verpixelt worden sind, ob alle Bilddaten die erforderliche Auflösung haben, ob die richtigen Sonderfarben im Dokument enthalten sind und ob das Trapping in Ordnung ist. Ein derartiges Workflow-Programm mit Preflight-Überprüfung stellt die Software "Prinect Prepress Manager" der Heidelberger Druckmaschinen AG dar.

Aus dem Patent US 7,773,242 B2 ist ein Verfahren zur automatischen Korrektur von Preflight-Fehlern bekannt, welche in Druckaufträgen festgestellt wurden, welche vom Kunden über das Internet an die Druckerei weitergeleitet werden. Das Verfahren zur Preflight-Fehlerkorrektur bestimmt dabei, ob die digitalen Daten des Druckauftrags mit entsprechenden Dateiformaten der Preflight-Software übereinstimmen und, falls dies nicht der Fall ist, inwieweit eine automatische Korrektur erfolgen kann. Wenn diese automatische Korrektur möglich ist, wird die automatische Korrektur der digitalen Druckauftragsdaten durchgeführt.

Das Patent US 6,407,820 B1 offenbart ein System und ein Verfahren zur Steuerung eines Workflow-Produktionssystems in der Druckindustrie. Das System und das Verfahren umfasst eine Workflow-Software, welche die einzelnen Stufen im Workflow einschließlich Druckauftragseingang, Druckauftragsvorbereitung, Druckauftragsweiterleitung und Druckauftragsabarbeitung steuert und erleichtert. Die Workflow-Software stellt dafür eine Objekt-orientierte Schnittstelle bereit, welche visuell mit dem Workflow im Druckereibetrieb korrespondiert.

Der Stand der Technik hält jedoch keine Lösungen dafür parat, dass heute viele Druckaufträge über unterschiedliche Eingangskanäle zur Druckvorstufe gelangen und die Druckaufträge meist an unterschiedlichen Orten abgespeichert sind. Dabei gehen die heute verfügbaren Softwareprodukte für die Druckindustrie immer noch davon aus, dass die Druckerei in einem ersten Schritt einen Druckauftrag erstellt und dem Bediener klar ist, welche vom Kunden angelieferten Dateien für diesen Druckauftrag benötigt werden. Somit beginnt die Abarbeitung eines Auftrags vom Kunden mit der Anlage eines Auftrags im System unter Festlegung der Produktionsstätte. Anschließend muss der Bediener die Daten des Kunden zu dem Auftrag hinzufügen. Die Zuordnung dieser Daten erfolgt anhand der Informationen aus dem Dateisystem. Dazu muss der Bediener wissen, wo die Dateien liegen, wie die Dateien heißen und in welcher Datei welche Produktinhalte zu finden sind. Dafür bieten ihm heutige Dateisysteme Informationen wie Erstellungsdatum, Größe der Datei und den Namen. Für die Zuordnung und die Abarbeitung der Dateien muss der Bediener jedoch wissen, was die Dateien im Einzelnen enthalten. So muss eine Datei mit farbigen Umschlagsseiten zum Beispiel anders behandelt werden als der Innenteil einer Broschüre. Bei heutigen Softwareprodukten stehen dem Bediener Informationen über Farbe, Größe und Inhalt der Kundendatei jedoch erst nach dem Hinzufügen zu einem Druckauftrag zur Verfügung. Dies führt dazu, dass der Bediener Dateien falsch zuordnen kann und sehr gut Bescheid wissen muss, wie er die korrekten Daten den jeweiligen Kundendateien zuordnet.

Aus der veröffentlichten Patentanmeldung US 2007/0046995 A1 ist eine Druckvorrichtung bekannt, welche über mehrere Eingangskanäle verfügt. Diese Druckvorrichtung ist insbesondere als Büro-Multifunktionsgerät in Form eines Netzwerkkopierers ausgestaltet, welcher an ein Netzwerk anschließbar ist, um Druckaufträge von an das Netzwerk angeschlossenen PCs zu empfangen. Weiterhin weist das Multifunktionsgerät eine Fax-Einheit auf, welche über eine Telefonleitung Faxe entgegennimmt und ausdruckt. Zusätzlich weist das Multifunktionsgerät eine USB-Schnittstelle auf, an die ein USB-Stick mit Bildern angeschlossen werden kann. Das Multifunktionsgerät weist außerdem einen Scanner auf, mit dem Vorlagen auf Papier eingescannt und kopiert werden können. Außerdem weist das Multifunktionsgerät eine sogenannte Job-Erstellungseinheit auf, welche mehrere Jobs, wie Druckjobs, Scan-Jobs, Faxempfang-Jobs und ähnliches erzeugt. Zudem gibt es eine Einheit zur Analyse eines Jobs, die ein Dokument auf bestimmte Einstellungen hin analysiert. Dabei kann das Dokument zusammen mit den analysierten Einstellungen in einer Speichereinheit abgespeichert werden.

Aus der europäischen Patentanmeldung EP 0 806 721 A1 geht ein Drucksteuerungssystem hervor, welches Druckjobs auf Basis des Inhalts des gesamten Druckjobs und auf Basis des Inhalts von Druckseiten verwaltet. Wenn ein Druckjob bearbeitet wird, so wird eine Druckjobbeschreibungsdatei von Druckjobseitendaten für jede Seite des Druckjobs erstellt. Die Druckjobbeschreibungsdatei enthält die Attribute des gesamten Druckjobs und eine Liste der Inhalte des Druckjobs. Den Attributen des Druckjobs ist jeweils eine Art von Druckjobseitendaten zugeordnet, wobei jede Seite entsprechende Bilddaten enthält. Es ist ein Druckjobsteuerungsmodul vorhanden, welches die notwendigen Bilddaten gemäß der Druckjobelementenliste ausliest und an einen Drucker versendet. Da eine Vielzahl von Druckjobs gemeinsame Daten aufweist, können so viele Druckjobverwaltungsfunktionen inklusive der Kombination von Druckjobs und dem Hinzufügen und Entfernen von Druckseiten leicht umgesetzt werden.

Aus der Patentanmeldung US 2010/0195124 A1 geht ein Verfahren zum Erzeugen von Vorlagen hervor, wobei eine Vorlage durch den Inhalt und Layout-Informationen eines Druckjobs definiert ist. Der Vorlage sind den Druckjob begleitende Daten zugeordnet, welche nachfolgende Dokumentenverarbeitungsprozesse steuern.

Es ist daher Aufgabe der vorliegenden Erfindung, ein Verfahren zur Erstellung von Druckvorstufendateien zur Abarbeitung in einem Druckprozess zu schaffen, welches dem Bediener die Aufgabe erleichtert, digitale Dateien zur Abarbeitung im Druckprozess vollständig bereitzustellen. Diese Aufgabe wird erfmdungsgemäß durch Patentanspruch 1 gelöst, vorteilhafte Ausgestaltungen der vorliegenden Erfindung ergeben sich aus den Unteransprüchen, der Beschreibung und den Zeichnungen.

Das erfindungsgemäße Verfahren wird vorzugsweise in Software realisiert und kann in vorhandene Vorstufensoftware, wie zum Beispiel die Software "Prinect" der Heidelberger Druckmaschinen AG integriert werden. Diese Software läuft dabei auf einem Workflow-Rechner in einer Druckerei oder einer zentralen Sammelstelle, wie zum Beispiel einem Print Broker, ab und bereitet die vom Kunden angelieferten digitalen Daten der Druckaufträge zur Abarbeitung in einem Druckprozess in einer Druckerei vor. Dazu werden die entsprechenden Druckvorstufendateien erstellt, welche zum Beispiel zur Belichtung von Druckplatten bei Offset-Druckmaschinen erforderlich sind oder welche im passenden Format an Digitaldruckmaschinen gesendet werden können. Bei dem erfindungsgemäßen Verfahren können die Druckaufträge in digitaler Form über mehrere Eingangskanäle, wie das Internet, E-Mail, FTP-Server oder Datenträger wie USB-Sticks, CD-ROM etc. zugeleitet werden. Das erfindungsgemäße Verfahren zeichnet sich dadurch aus, dass die digitalen Daten der Druckaufträge nach der Zuleitung über die mehreren Eingangskanäle in dem Rechner einer sofortigen Analyse unterzogen werden und anschließend in einem Speicher abgelegt werden. Diese Vorgehensweise führt dazu, dass dem Bediener in dem Workflow-System durch die sofortige Analyse alle für die weitere Abarbeitung eines Druckauftrags notwendigen Daten zur Verfügung stehen und die Druckaufträge jederzeit ohne Wartezeiten im Zugriff sind und problemlos durch die Software im System aufgefunden werden können.

Noch bevor die digitalen Daten der Druckaufträge der Kunden das erste Mal in einem Speicher abgelegt werden, werden sie zunächst analysiert und somit in dem System jederzeit problemlos auffind- und zuortbar gemacht. Damit wird verhindert, dass der Bediener die digitalen Daten der Druckaufträge unstrukturiert im System ablegt, was ein Wiederauffinden erschwert oder zu einer falschen Zuordnung von Daten des Kunden zu einem Druckauftrag führt. Weiterhin hat die sofortige Analyse den Vorteil, dass bei der späteren Abarbeitung des Druckauftrags längere Wartephasen für den Bediener ausbleiben, da die Analyse sofort beim Eingang des Druckauftrags durchgeführt wird und nicht erst, wenn der Druckauftrag tatsächlich zur Abarbeitung im Druckprozess aufbereitet wird. Daher ist es wichtig, dass die digitalen Daten der Druckaufträge erst nach der Analyse in dem Speicher abgelegt werden, so dass sichergestellt wird, dass nur analysierte und korrekt zugeordnete digitale Daten der Druckaufträge im System vorhanden sind, so dass die Druckaufträge jederzeit problemlos aufgefunden und im Druckprozess abgearbeitet werden können. Es gibt somit keine unstrukturierte Ablage von digitalen Daten der Druckaufträge im System oder in der Workflow-Software mehr.

In einer Ausgestaltung der Erfindung ist vorgesehen, dass die Druckaufträge in digitaler Form über die Eingangskanäle zugeleitet werden, wobei die Eingangskanäle eine Internet-Anbindung, eine FTP-Server-Anbindung, ein Speichermedium oder eine E-Mail umfassen. Durch diese Ausgestaltung der Erfindung wird sichergestellt, dass die Druckaufträge aus sämtlichen Quellen einer sofortigen Analyse unterzogen werden und nur nach der Analyse in strukturierter Form im System abgelegt werden, so dass die Druckaufträge unabhängig vom jeweiligen Eingangskanal jederzeit problemlos aufgefunden und abgearbeitet werden können. Eine unstrukturierte Ablage ist damit ausgeschlossen.

In einer weiteren Ausgestaltung der Erfindung ist vorgesehen, dass die digitalen Auftragsdaten der Druckaufträge bei der Analyse auf die Eigenschaften des jeweiligen Druckauftrags hin geprüft und die Ergebnisse der Analyse im Speicher abgelegt werden. Somit sind im System sämtliche für die Abarbeitung im Druckprozess benötigten Daten frühzeitig vorhanden, und die Druckaufträge sind jederzeit anhand der analysierten Daten im Zugriff.

Des Weiteren ist vorgesehen, dass die digitalen Daten der Druckaufträge bei der Analyse vom Rechner hinsichtlich weiterer benötigter Informationen geprüft werden und diese weiteren zusätzlichen Informationen für die Abarbeitung des jeweiligen Druckauftrags aus den Daten des Druckauftrags und/oder weiterer vorhandener Daten im Rechner von diesem ermittelt und im Speicher abgelegt werden. Auf diese Art und Weise werden alle benötigten Daten frühzeitig berechnet und bei Unvollständigkeit werden beim Bediener zusätzliche Informationen abgefragt. Durch die frühzeitige Ergänzung und Zuordnung der Kundendaten zu einem Druckauftrag ist die Fehlerquelle im weiteren Verlauf des Druckprozesses massiv reduziert, da die fehlenden Daten sofort am Anfang ergänzt werden, wenn dem Bediener der Inhalt der Kundendatei noch präsent ist. Zudem muss der Bediener nur noch wenige, nicht selbst vom System berechnete Daten eingeben. Nachdem die so ergänzten Daten des jeweiligen Druckauftrags im Speicher abgelegt sind, entfällt zudem das Kopieren der Kundendaten während der Bearbeitung durch den Bediener, da sie bereits von Anfang an dem System bekannt sind. Auf diese Art und Weise wird die Arbeitszeit des Bedieners bei der Abarbeitung der Daten im späteren Druckprozess deutlich verkürzt. Somit verringert die vorliegende Erfindung gegenüber dem bekannten Verfahren deutlich die Gefahr einer Fehlbedienung und ermöglicht einen schnelleren, vollautomatischen Produktionsprozess in der Druckvorstufe.

In einer vorteilhaften Ausgestaltung der vorliegenden Erfindung ist vorgesehen, dass die Daten der Druckaufträge im Speicher in einem Ordner abgelegt werden, welcher vom Bediener auswählbar ist. Weiterhin ist auch die Ordnerstruktur im Speicher vom Bediener auswählbar. Dadurch ist es möglich, dass die Druckaufträge in Ordnern und in einer Ordnerstruktur im Speicher abgelegt werden, welche den Wünschen und Erfordernissen des Bedieners entsprechen. Der Bediener muss sich somit nicht mit vorgegebenen Ordnern oder einer vorgegebenen Ordnerstruktur abfinden, sondern kann diese an die individuellen Bedürfnisse des Betriebs anpassen. Damit wird verhindert, dass der Bediener aus Unzufriedenheit über eine fest vorgegebene Struktur andere Ablageorte vorsieht, die dann vom System nicht aufgefunden werden können und zu Fehlern führen.

Weiterhin ist vorgesehen, dass in dem Speicher abgelegte digitale Daten der Druckaufträge über eine Drag and Drop-Funktion auf einer Benutzeroberfläche des Bildschirms in eine Abarbeitung der digitalen Druckaufträge ziehbar sind. Die gemäß der vorliegenden Erfindung vorbereiteten und jederzeit im Zugriff befindlichen digitalen Daten der Druckaufträge können so einfach per Drag and Drop auf einer Benutzeroberfläche am Bildschirm in den Abarbeitungsprozess des jeweiligen Druckauftrags gezogen werden. Dabei kann der Bediener digitale Daten aus dem Speicher in vorhandene Druckaufträge ziehen oder Daten zu einem schon vorhandenen Druckauftrag hinzufügen. Danach kann nun der Druckprozess automatisch starten. Auch dadurch werden die Wartezeiten für den Bediener mit dem erfindungsgemäßen Verfahren deutlich verkürzt. Denn die digitalen Daten der Druckaufträge sind auf dem Server mit dem Speicher bereits vorhanden und müssen nur noch in den jeweiligen Auftrag auf der Benutzeroberfläche verschoben werden. Somit entsteht keine Wartezeit, da der Kopiervorgang entfällt.

In einer besonders vorteilhaften Ausgestaltung der Erfindung ist vorgesehen, dass der Rechner anhand vom Bediener eingegebenen Daten den passenden Preflight-Prozess auswählt und durchführt und/oder den geeigneten Produktionsprozess auswählt und einleitet. Durch die sofortige Analyse der Daten des jeweiligen Druckauftrags und der unmittelbaren Abfrage noch benötigter Daten beim Bediener sind im System alle Daten bekannt, mit denen der Rechner einen passenden Preflight-Prozess auswählen und durchführen kann. Auch wenn der Preflight-Prozess weiterhin erst bei der eigentlichen Abarbeitung des Druckauftrags zu einem späteren Zeitpunkt durchgeführt wird, so ist von vornherein sichergestellt, dass aufgrund der rechtzeitig erfassten Daten der Preflight-Prozess zu einem späteren Zeitpunkt automatisch durchgeführt wird und der optimale Preflight-Prozess ausgewählt wird. Auch der geeignete Produktionsprozess kann vom Rechner ausgewählt und eingeleitet werden. Zum Produktionsprozess zählen vor allem der Maschinenpark der Druckerei sowie sonstige Ressourcen. Auch können im Rechner bestimmte Aufträge oder Vorgänge hinterlegt sein, die die Druckerei z.B. aus finanziellen oder organisatorischen Gründen nicht durchführen will, auch hier nimmt der Rechner einen Abgleich vor und verhindert dann die Annahme und Abarbeitung unwirtschaftlicher Aufträge oder die Durchführung bestimmter Vorgänge, hier könne alternative Produktionsvorgänge vom Rechner vorgeschlagen und zur Ausführung gebracht werden, die die Druckerei freigegeben hat. Somit sind die technischen Möglichkeiten der Druckerei nicht das einzige Kriterium bei der Auswahl der geeigneten Produktionsprozesse.

Die vorliegende Erfindung wird nachfolgend anhand mehrerer Figuren näher beschrieben und erläutert. Es zeigen:
- Figur 1:: ein Verfahren zur Erfassung von Kundenaufträgen nach dem Stand der Technik,
- Figur 2:: das erfindungsgemäße Verfahren zur Erfassung und sofortigen Analyse von Kundenaufträgen,
- Figur 3:: eine Benutzeroberfläche für das erfindungsgemäße Verfahren mit einer vom Benutzer ausgewählten Ordnerstruktur,
- Figur 4:: das Übernehmen von analysierten Druckaufträgen per Drag and Drop auf einer Benutzeroberfläche in die Abarbeitung der Druckaufträge,
- Figur 5:: Übersichtsbilder eines Druckauftrags zum Durchblättern und
- Figur 6:: eine vom Bediener ausgewählte Ordnerstruktur im Speicher.

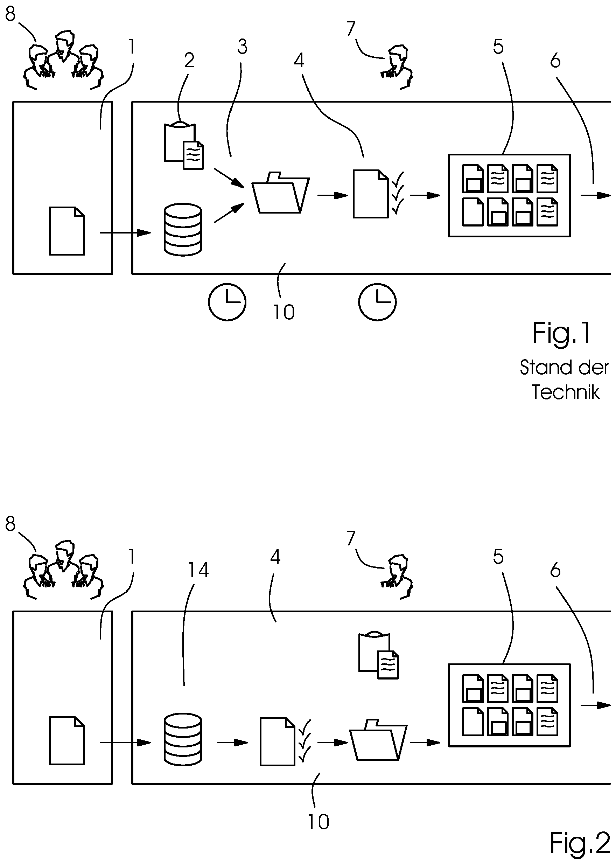

In Figur 1 ist der Verfahrensablauf im Vorstufen-Workflow einer Druckerei beschrieben, wie er bei heute verfügbaren Software-Produkten nach dem Stand der Technik abläuft.

Dabei liefert der Kunde 8 einen Druckauftrag als Kundendatei 1 in digitaler Form an. Die Kundendatei 1 wird meist in Form einer PDF-Datei entweder offline auf einem Datenträger wie einem USB-Stick oder einer CD-ROM angeliefert, oder die Kundendatei 1 wird online über das Internet über ein Web-Portal, einen FTP-Server oder als Anhang in einer E-Mail in die Druckerei geschickt. In der Druckerei legt ein Bediener 7 in der Workflow-Software einen entsprechenden Druckauftrag an und kopiert die PDF-Dateien in der Kundendatei 1 in diesen angelegten Auftrag. Auf diese Art und Weise wird die Kundendatei 1 als Druckauftrag in der Workflow-Software und auf einem Workflow-Rechner 10 abgelegt. Problematisch daran ist, dass der Kopiervorgang der PDF-Dateien in den angelegten Druckauftrag des Workflow-Systems je nach Dateigröße mehrere Minuten dauern kann und der Bediener 7 warten muss oder zwischenzeitlich einen anderen Druckauftrag bearbeiten muss, bis der Kopiervorgang abgeschlossen ist. Durch den zwischenzeitlichen Wechsel zu einem anderen Druckauftrag kommen bei der Anlage des Druckauftrags jedoch häufig Fehler vor. Weiterhin muss der Bediener 7 warten, bis die Workflow-Software die nötigen Informationen zusammengestellt hat. Die Wartezeiten beim Kopiervorgang 3 und der Informationszusammenstellung 4 sind in Figur 1 mit zwei Uhren angedeutet. Erst wenn diese Vorgänge abgeschlossen sind, kann der Bediener 7 eventuell benötigte Korrekturen an den gelieferten PDF-Dateien 13 der Kundendatei 1 vornehmen und die einzelnen Dateien den Produktteilen wie zum Beispiel "Umschlag" oder "Innenteil" zuordnen.

Diese Zuordnung durch den Bediener 7 ist notwendig, da für den Produktionsprozess die Produktteile oft unterschiedlich behandelt werden. So werden Umschläge und Innenteile zum Beispiel auf unterschiedlichen Maschinen produziert. Dieser Editierungsvorgang des jeweiligen Druckauftrags 5 ist daher notwendig, um die Produktion korrekt ablaufen zu lassen. Erst dann kann der Auftrag durch Weiterleitung an den Druckprozess 6 abgearbeitet werden und an digitale Druckmaschinen weitergeleitet bzw. an einen Plattenbelichter zur Herstellung der entsprechenden Druckplatten für Offsetdruckmaschinen übermittelt werden. Nach der Weiterleitung an den Druckprozess 6 läuft die Produktion je nach Automatisierungsgrad entweder automatisch oder manuell weiter.

Bei dem erfindungsgemäßen Verfahren gemäß Figur 2 werden ebenfalls die Kundendateien 1 vom Kunden 8 über verschiedene Kanäle bei der Druckerei angeliefert. Allerdings ist nun in der Workflow-Software ein neuer Prozess vorgesehen, der die unterschiedlichen Eingangskanäle, d.h. deren Schnittstellen zum Workflowsystem, bzw. Ordner in einem Dateisystem überwacht und eingehende Kundendateien 1 automatisch in den Workflow übernimmt. Dabei wird die Kundendatei 1 für den Bediener 7 analysiert, wobei bei dieser Analyse Informationen wie Anzahl und Namen der Farben für den Druckprozess, die Ausmaße des Druckproduktes sowie die Anzahl der Seiten des Druckauftrags in der Kundendatei 1 ermittelt werden. Zusätzlich erstellt der Workflow-Rechner 10 mit Hilfe des neuen Verfahrens Übersichtsbilder des Inhalts des Druckauftrags in der Kundendatei 1. Diese Übersichtsbilder und zusätzliche Informationen bilden die Grundlage für eine bessere und schnellere Identifizierung der richtigen Kundendateien 1 für den vom Bediener 7 anzulegenden jeweiligen Druckauftrag.

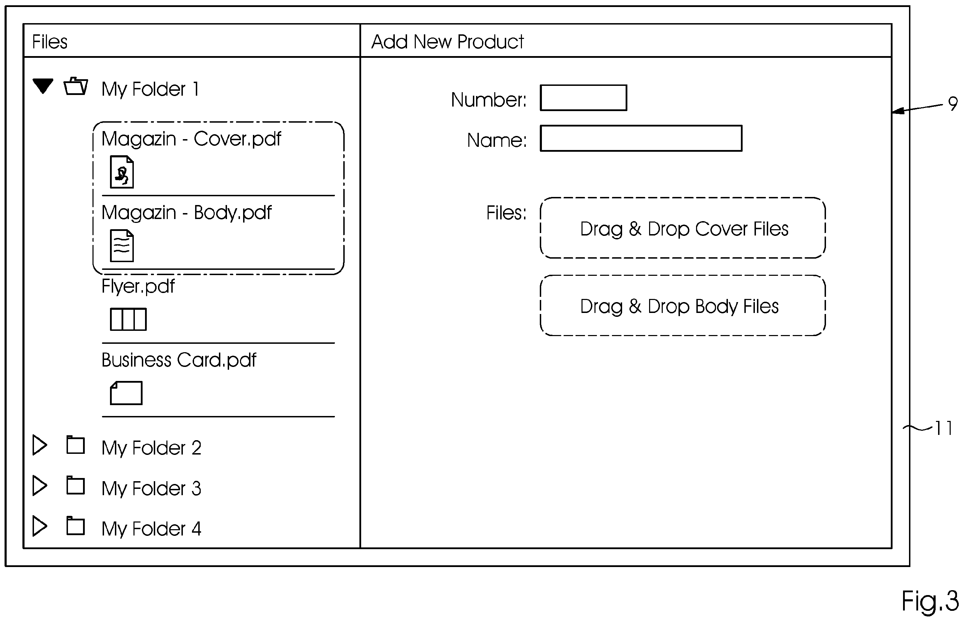

Der Bediener 7 kann dabei gemäß Figur 3 über eine Benutzeroberfläche 9 auf einem Bildschirm 11 auf die Kundendateien 1 aus dem Speicher 14, in dem alle Kundendateien 1 nach der Analyse abgelegt worden sind, jederzeit zugreifen.

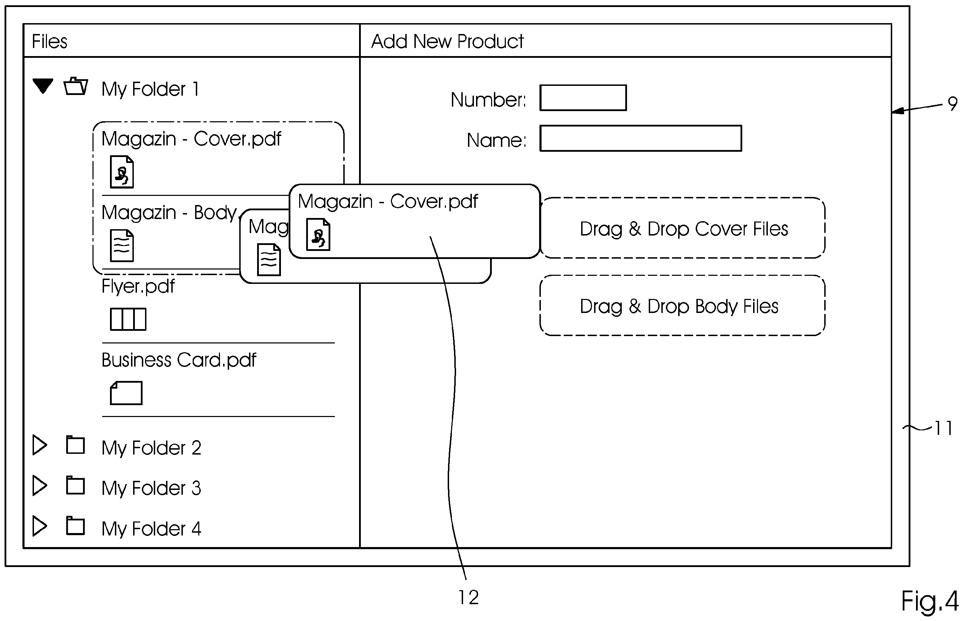

Figur 4 zeigt, wie der Bediener 7 auf der Benutzeroberfläche 9 des Bildschirms 11 einfach durch Drag and Drop-Funktion 12 in dem Speicher 14 abgelegte Druckaufträge in Form von Kundendateien 1 in vom Bediener 7 erstellte Druckaufträge ziehen kann oder die Kundendateien 1 einem schon vorhandenen Druckauftrag hinzufügen kann. Danach kann der Druckprozess vollautomatisch ablaufen. Auf diese Art und Weise reduzieren sich die Wartezeiten für den Bediener 7 deutlich, da die Analyse der Kundendateien 1 sofort bei der Entgegennahme der Kundendateien 1 stattfindet, bevor diese zum ersten Mal in dem Speicher 14 abgelegt werden und somit dann sofort für die Anlage eines Druckauftrags in der Workflow-Software zur Verfügung stehen. Weiterhin muss der Bediener 7 an dieser Stelle auch nicht mehr irgendwelche Preflight-Ergebnisse abwarten, da er aufgrund seiner vorher erstellten Informationen den optimalen Produktionsprozess auswählen konnte. Durch den neuen Analyseprozess kann der Bediener oder die Software den optimalen Preflight-Prozess auswählen.

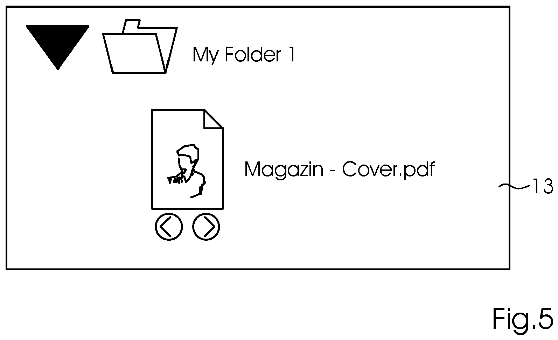

Weiterhin ist es nun möglich, dass dem Bediener 7 wie in Figur 5 alle Seiten eines Druckauftrags als Übersichtsbilder zur Verfügung gestellt werden, die der Bediener 7 über zwei Bedienelemente auf dem Bildschirm 11 durchblättern kann, ohne die entsprechende PDF-Datei 13 der Kundendatei 1 zu öffnen.

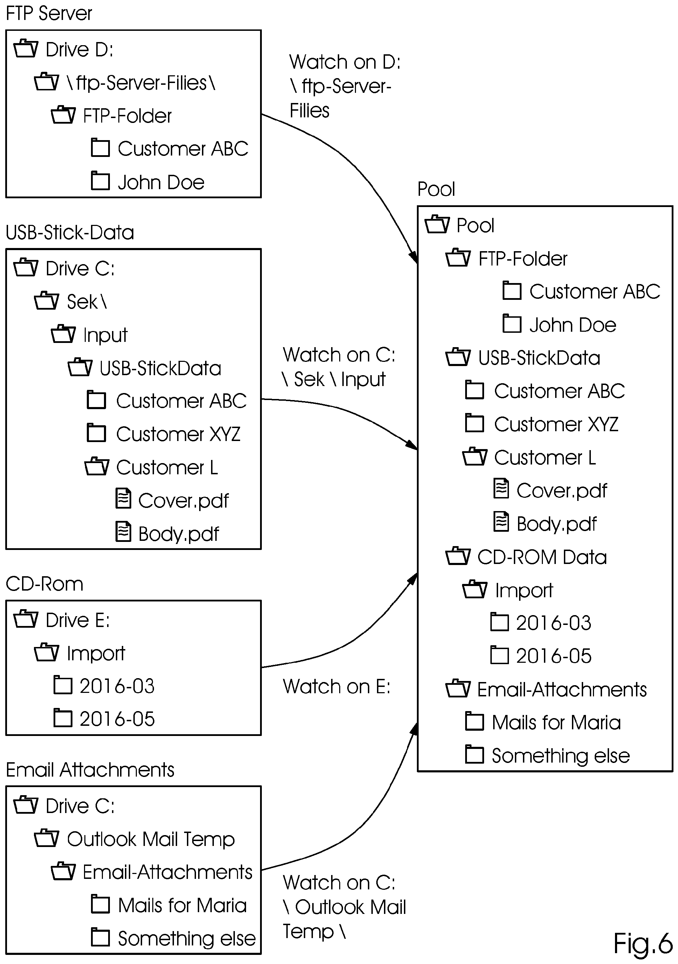

Figur 6 zeigt die Ordnerstruktur im Speicher 14. Der Speicher 14 wird als eine Art Datenpool verwendet, in dem alle analysierten Kundendateien 1 abgelegt werden, welche dann in vom Bediener 7 angelegte Druckaufträge per Drag and Drop-Funktion 12 gezogen werden können. Dabei ist zumindest der übergeordnete Ordner vom Bediener 7 wählbar, so dass die Ablage der Dateien 1 vom Bediener 7 bestimmt werden kann. In dem Speicher 14 befindet sich die gleiche Ordnerstruktur, die der Bediener 7 in dem zu überwachenden Ordner eingestellt hat. In dem zu überwachenden Ordner werden alle ankommenden Kundendateien 1 nach der Analyse abgelegt. So wird gewährleistet, dass jede Druckerei ihre eigene Sortierung und Strukturierung vornehmen kann. So können zum Beispiel die Unterordner nach Kundennamen strukturiert sein.

Es ist außerdem möglich, während des Analyseprozesses gewisse Korrekturen an Kundendateien 1 vorzunehmen. Zumindest vereinzelte Prüfungen und Korrekturen aus dem Preflight-Prozess können so nach vorne verlagert werden, da diese schon ohne genaue Kenntnisse über die Kundendateien 1 durchgeführt werden können. Allerdings können nicht alle Preflight-Korrekturen schon im Datenpool des Speichers 14 erledigt werden, da für einige Korrekturen der genaue Produktionsprozess bekannt sein muss.

Des Weiteren ist es möglich, dass durch die Ermittlung weiterer Informationen aus den Kundendateien 1 eine automatische Zuordnung der Seiten zu einem Druckauftrag erfolgen kann. So kann zum Beispiel anhand der Seitenzahlen eine Zuordnung zum Umschlag bzw. Innenteil erfolgen. So wird ein Dokument mit vier Seiten automatisch dem Umschlag und ein Dokument mit 32 Seiten automatisch dem Innenteil zugeordnet. Außerdem ist es möglich, nicht nur bestimmte Ordner als Eingangskanäle zu bestimmen und zu überwachen, es ist auch möglich, freigegebene Ordner in einem gesamten Netzwerk zu überwachen, wobei neben Dateien in Ordnern auch Dateien in Dateiarchiven erfasst werden können.

Auf diese Art und Weise wird die korrekte Übernahme der PDF-Dateien 13 in der Kundendatei 1 in die vom Bediener 7 in der Druckerei angelegten Druckaufträge erheblich beschleunigt und weniger fehleranfällig gestaltet.

### Bezugszeichenliste

- 1: Kundendatei
- 2: Auftragsanlage
- 3: Kopiervorgang
- 4: Informationszusammenstellung
- 5: Editierung des Druckjobs
- 6: Weiterleitung an Druckprozess
- 7: Bediener
- 8: Kunde
- 9: Benutzeroberfläche
- 10: Workflow-Rechner
- 11: Bildschirm
- 12: Drag and Drop von Auftrags-Dateien
- 13: PDF-Datei
- 14: Speicher

## Patentansprüche

1. Verfahren zur Erstellung von Druckvorstufendateien zur Abarbeitung in einem Druckprozess mittels eines Rechners (10) mit einem Bildschirm (11),
wobei dem Rechner (10) über mehrere Eingangskanäle Druckaufträge (1) in digitaler Form zugeleitet werden,
wobei die digitalen Daten der Druckaufträge (1) nach der Zuleitung über die Eingangskanäle in dem Rechner (10) einer sofortigen Analyse unterzogen werden und anschließend in einem Speicher (14) abgelegt werden,
wobei die digitalen Daten der Druckaufträge (1) erst nach der Analyse in dem Speicher (14) im Rechner (10) abgelegt werden.

2. Verfahren nach Anspruch 1,
wobei die Druckaufträge (1) in digitaler Form über die mehrere Eingangskanäle zugeleitet werden, wobei die mehrere Eingangskanäle eine Internet-Anbindung, eine FTP-Serveranbindung, ein Speichermedium oder eine E-Mail umfassen.

3. Verfahren nach einem der vorhergehenden Ansprüche,
wobei die digitalen Daten der Druckaufträge (1) bei der Analyse auf die Eigenschaften des jeweiligen Druckauftrags (1) geprüft und die Ergebnisse der Analyse im Speicher (14) abgelegt werden.

4. Verfahren nach einem der vorhergehenden Ansprüche,
wobei die digitalen Daten der Druckaufträge (1) bei der Analyse vom Rechner (10) hinsichtlich weiterer benötigter Informationen geprüft werden und diese weiteren zusätzlichen Informationen für die Abarbeitung des jeweiligen Druckauftrags (1) aus den digitalen Daten des Druckauftrags (1) und/oder weiterer vorhandener Daten im Rechner (10) von diesem ermittelt und im Speicher (14) abgelegt werden.

5. Verfahren nach einem der vorhergehenden Ansprüche,
wobei die digitalen Daten der Druckaufträge (1) im Speicher (14) in einem Ordner abgelegt werden, welcher vom Bediener auswählbar ist.

6. Verfahren nach Anspruch 5,
wobei der Speicher (14) eine Ordnerstruktur aufweist, welche vom Bediener auswählbar ist.

7. Verfahren nach einem der vorhergehenden Ansprüche,
wobei in dem Speicher (14) abgelegte digitale Daten der Druckaufträge (1) über eine Drag and Drop-Funktion (12) auf einer Benutzeroberfläche (9) des Bildschirms (11) in eine Abarbeitung der digitale Druckaufträge ziehbar sind.

8. Verfahren nach einem der vorhergehenden Ansprüche,
wobei der Rechner (10) anhand vom Bediener eingegebenen Daten den passenden Preflight-Prozess auswählt und durchführt und/oder den geeigneten Produktionsprozess auswählt und einleitet.

9. Verfahren nach einem der vorhergehenden Ansprüche,
wobei die digitalen Daten der Druckaufträge (1) im PDF-Format vorliegen.

## Claims

1. Method for creating prepress files for being processed in a printing operation by means of a computer (10) with a screen (11),
wherein print jobs (1) are provided to the computer (10) in digital form through multiple input channels,
wherein having received the digital data of the print jobs (1) via the input channels, the computer (10) subjects the digital data of the print jobs (1) to an immediate analysis and subsequently saves them in a memory (14),
wherein the digital data of the print jobs (1) are not saved in the memory (14) of the computer (10) until they have been analyzed.

2. Method according to claim 1,
wherein the print jobs (1) in digital form are provided via the multiple input channels, said multiple input channels comprising an internet connection, an FTP server connection, a storage medium or an e-mail.

3. Method according to any one of the preceding claims,
wherein during the analysis, the digital data of the print jobs (1) are checked in terms of the properties of the respective print job (1) and the results of the analysis are saved in the memory (14).

4. Method according to any one of the preceding claims,
wherein during the analysis, the computer (10) checks the digital data of the print jobs (1) for additional necessary information and establishes said further additional information for the processing of the print job (1) from the digital data of the print job (1) and/or from further data available on the computer (10) and saves them in the memory (14).

5. Method according to any one of the preceding claims,
wherein the digital data of the print jobs (1) are saved in the memory (14) in a folder that is selectable by the operator.

6. Method according to claim 5,
wherein the memory (14) has a folder structure that is selectable by the operator.

7. Method according to any one of the preceding claims,
wherein a drag-and-drop function (12) is provided to drag digital data of the print jobs (1) saved in the memory (14) on a user interface (9) of the screen (11) to a processing of the digital print jobs.

8. Method according to any one of the preceding claims,
wherein based on data input by the operator, the computer (10) selects and implements a suitable preflight process and/or selects and initiates a suitable production process.

9. Method according to any one the preceding claims,
wherein the digital data of the print jobs (1) are available as a PDF document.

## Revendications

1. Procédé pour la génération de fichiers de prépresse pour le traitement dans un processus d'impression à l'aide d'un ordinateur (10) avec un écran (11),
pour lequel des commandes d'impression (1) sont transmises sous forme numérique à l'ordinateur (10) via plusieurs canaux d'entrée,
pour lequel les données numériques des commandes d'impression (1) sont, après transmission à l'ordinateur (10) via les canaux d'entrée, soumises à une analyse immédiate, puis stockées dans une mémoire (14),
pour lequel
les données numériques des commandes d'impression (1) ne sont stockées qu'après l'analyse dans la mémoire (14) dans l'ordinateur (10).

2. Procédé selon la revendication 1,
pour lequel
les commandes d'impression (1) sont transmises sous forme numérique via les plusieurs canaux d'entrée, pour lequel les plusieurs canaux d'entrée englobent une connexion Internet, une connexion à un serveur FTP, un support de stockage ou un e-mail.

3. Procédé selon l'une des revendications précédentes,
pour lequel
les données numériques des commandes d'impression (1) font lors de l'analyse l'objet d'un contrôle des caractéristiques de la commande d'impression (1) considérée et les résultats de l'analyse sont stockés dans la mémoire (14).

4. Procédé selon l'une des revendications précédentes,
pour lequel
les données numériques des commandes d'impression (1) sont contrôlées lors de l'analyse par l'ordinateur (10) en ce qui concerne d'autres informations requises, et ces informations supplémentaires requises pour le traitement de la commande d'impression (1) considérée sont déterminées à partir des données numériques de la commande d'impression (1) et/ou d'autres données dans l'ordinateur (10) par ce dernier et stockés dans la mémoire (14).

5. Procédé selon l'une des revendications précédentes,
pour lequel
les données numériques des commandes d'impression (1) dans la mémoire (14) sont stockées dans un dossier, qui peut être sélectionné par l'opérateur.

6. Procédé selon la revendication 5,
pour lequel
la mémoire (14) présente une structure de dossiers, sélectionnable par l'opérateur.

7. Procédé selon l'une des revendications précédentes,
pour lequel
les données numériques des commandes d'impression (1) stockées dans la mémoire (14) peuvent être déplacées via une fonction glisser-déposer (12) sur une interface utilisateur (9) de l'écran (11) dans un traitement des commandes d'impression numériques.

8. Procédé selon l'une des revendications précédentes,
pour lequel
l'ordinateur (10) sélectionne sur la base des données saisies par l'opérateur le processus de préflashage adapté et l'exécute et/ou sélectionne et amorce le processus de production approprié.

9. Procédé selon l'une des revendications précédentes,
pour lequel
les données numériques des commande d'impression (1) sont disponibles au format PDF.
